# EUROPEAN PATENT SPECIFICATION

(11) **EP 1 251 420 B1**
(45) Date of publication and mention of the grant of the patent: **19.03.2003**
(21) Application number: 01109761.5
(22) Date of filing: 20.04.2001
(51) Int. Cl.: G06F 1/00

(54) **Method and apparatus for access security in computers**
Verfahren und Vorrichtung zur Zugriffssicherheit in Rechnersystemen
Méthode et appareil de sécurité d'accès d'ordinateurs

(43) Date of publication of application: 23.10.2002
(73) Proprietor: ATOZ TECHNOLOGY (TAIWAN) INC., Hsin-Tien, Taipei Hsien, Taiwan, R.O.C. (TW)
(72) Inventor: Chen, Ya-Huang, c/o Atoz Technologie (Taiwan) Inc., Hsin-Tien, Taipei Hsien (TW)
(74) Representative: Hoarton, Lloyd Douglas Charles

(56) References cited:
- EP-A- 0 413 822
- US-A- 5 836 010
- US-A- 5 841 868
- US-A- 6 087 955
- US-A- 6 088 450

## Description

### BACKGROUND OF THE INVENTION

### 1. Field of the Invention

The present invention generally relates to a method and apparatus for preventing a computer unit from being illegally accessed. More specifically, a control chip, which only accepts a valid password inputted through a computer keyboard, is used to control the activation of the computer unit as to ensure access security.

### 2. Description of Related Art

Although the convenience of computers has been greatly accepted and welcomed following the application of individual privacy and financial system, its security can also be a source of concern, especially in view of the fact that the personal payment and identification system on the internet will lead the way in constructing the e-commerce infrastructure. Therefore, before computers can be widely disseminated, one must analysis its current security factors. Otherwise, as long as computers can be illegally accessed, all data contained therein may be stolen or altered.

The traditional method for identifying and protecting a computer unit involves using an OS for identification after the computer unit has been activated, or using a BIOS for identification while the computer unit is activated. However, the traditional method cannot totally prevent unauthorized access from a computer hacker. By contrast, the present invention permits the activation of computer unit only after proper personal identification, instead of performing personal identification after the computer unit has been activated.

US 5836010A discloses a personal computer system for the prevention of unauthorised user access, the system comprising an IC card, a card read/write unit and at least one input means for allowing the user to input commands and information to gain access to the computer. The system generates an interrupt signal if the IC card is removed from the card read/write controller. The system allows its background or internal programs and functions to continue whilst preventing unauthorised use of other programs.

### SUMMARY OF THE INVENTION

An object of the present invention is to provide a method and apparatus for access security in the computer unit by validating personal identification data prior to any computer activation, as compared to validating personal identification data after the computer unit has been activated.

Another object of the present invention is to initiate a suspend function in the computer unit as to sop all input and output operations if the personal identification data cannot be located prior to the performing normal deactivation procedure in the computer unit.

Accordingly, the present invention provides a method for preventing unauthorized access into a computer unit using a personal identification device and an input and output (I/O) control chip to control the activation of the computer unit, wherein personal identification data is validated prior to any computer activation, the method comprising the steps of:
(a) said personal identification device entering into a standby status;
(b) inputting said personal identification data into said personal identification device;
(c) determining the validity of said personal identification data and returning to said step (a) if said personal identification data is invalid;
(d) said personal identification device activating a control circuit, which allows said I/O control chip to activate a computer keyboard and displaying a notification message prompting an authorized user to enter a password;
(e) said authorized user entering said password;
(f) said I/O control chip determining validity of said password and returning to said step (e) if said password is invalid;
(g) said I/O control chip activating said computer unit;
(h) said computer unit returns to normal operations;
(i) searching for said personal identification data in said personal identification device, and jumping to step (n) if said personal identification data are found;
(j) said personal identification device activating a suspend function in said computer unit to stop all I/O operations, and informing said suspension to said authorized user through a personal data display;
(k) searching for new personal identification data and returning to step (j) if not found;
(l) determining the validity of said new personal identification data and returning to said step (j) if invalid;
(m) said personal identification device deactivating said suspend function and returning to step (h); and
(n) returning to normal operations for said computer unit.

Preferably, further comprising the steps of:
(o) searching for said personal identification data in a preset time period and jumping to step (q) if not found;
(p) triggering an alarm through said personal identification device and returning to step (o); and
(q) said identification device returning to a standby status.

Conveniently, said personal identification device is a card reader.

Advantageously, said personal identification data are derived from an IC card.

Preferably, said personal identification data display is an LED.

Conveniently, said preset time period is set for 10 seconds.

Another aspect of the present invention provides an apparatus for a computer unit security system wherein personal identification data is validated prior to any computer activation, the apparatus comprising:
personal identification data for use by a personal identification device for identifying an authorised user;
a personal identification device having means to read the personal identification data and determine the presence thereof; and an I/O control circuit connectable to a computer unit, having a user interface device, so as to identify an authorized user and to suspend operation of the computer unit when the personal identification data is absent from the personal identification device;
means to control the operation of the computer unit;
means to connect the personal identification device to the user interface device and activate the user interface device to allow entry of a password after the authorized user has been identified by the personal identification device; and
means to activate normal operations of the computer unit upon entry of a valid password.

Preferably, the user interface device is a keyboard

Conveniently, said I/O control circuit suspends all operations of said computer unit when said personal identification data are removed prior to said computer unit being shut down, and preventing said computer unit from reactivation if said personal identification data is not revalidated, and wherein said computer unit comprises:
a processor;
a North Bridge chip connected to said processor for controlling data flow between said processor and a PCI and allowing said processor to retrieve or save files from at least a memory and AGP;
a South Bridge chip connected to said North Bridge chip and an I/O control chip and serving as a bridge between a USB interface and said I/O control device;
said I/O control chip connected to said South Bridge chip for activating said computer unit after receiving a valid password inputted through a keyboard; and
said keyboard connected to said personal identification device and said I/O control chip which activates said keyboard for inputting said valid password after said authorized user has been identified.

Advantageously, said personal identification device includes an LED.

Preferably, said personal identification device includes a timer for reminding said authorized user regarding the non-removal of said personal identification data within a preset time period after said computer unit has been deactivated.

Conveniently, said preset time period is set for 10 seconds.

Advantageously, said personal identification device is a reader.

Preferably, said personal identification data are derived from an IC card.

### BRIEF DESCRIPTION OF THE DRAWINGS

Fig. 1 is a schematic diagram showing various elements according to the present invention; and
Fig. 2 is a flow chart showing various steps according the present invention.

### NUMERAL DESIGNATIONS FOR MAIN COMPONENTS

100 Computer unit;
110 Processor;
120 North Bridge Chip;
130 South Bridge Chip;
140 Winbond Super I/O Chip;
150 Computer Keyboard;
160 Serial Port;
170 Parallel Port;
200 Card Reader; and
210 LED.

### DETAILED DESCRIPTION OF THE INVENTION

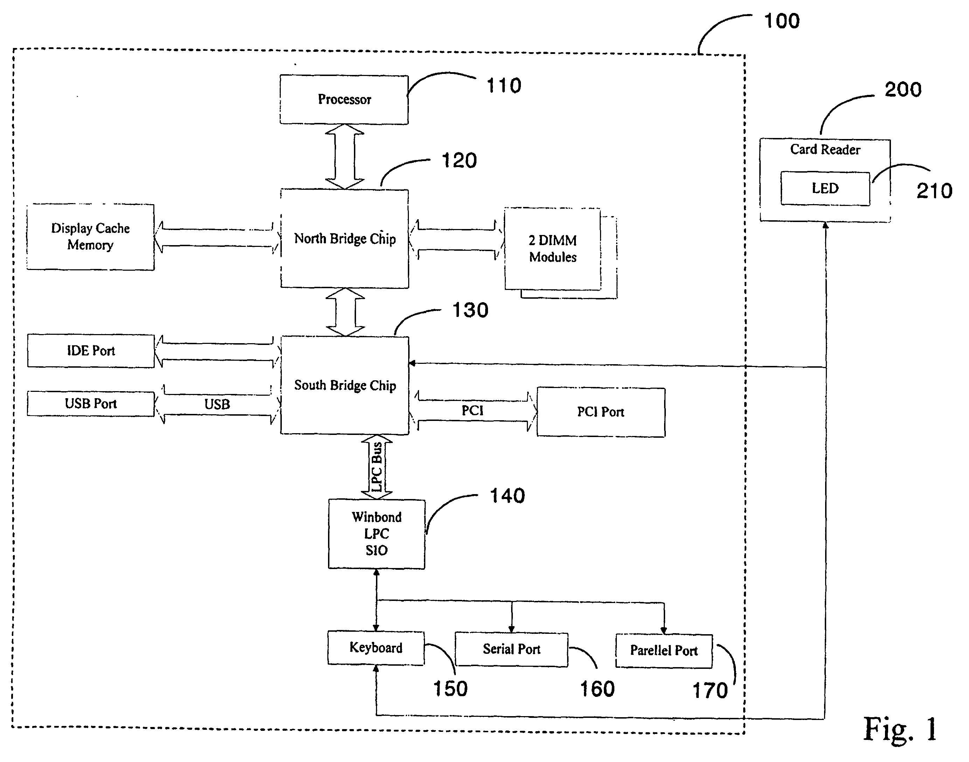

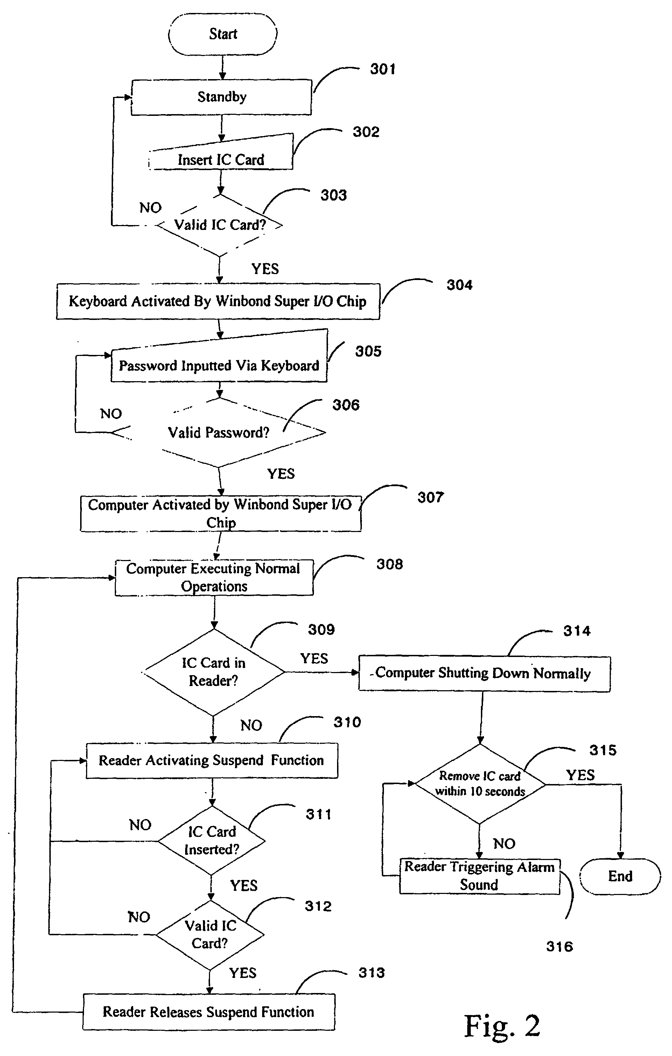

The present invention can be more clearly understood by referring to Figs. 1 and 2. Fig. 1 shows one embodiment of the present invention in which an IC card is used to carry personal identification data, and the apparatus includes at least the elements discussed hereinbelow.

The IC card (not shown) provides the personal identification data to a card reader 200 to validate an authorized user. The card reader 200, which includes an LED 210, uses a control line to communicate with a computer unit 100 and performs validation function to the IC card. If the authorized user is validated, then the control line is activated to allow the computer unit to perform normal operations. However, if the IC card were to be removed prior to the proper shut down operation of the computer, then the card reader would initiate the suspend function to stop all input and output operations. Moreover, if the revalidation process fails, then the computer unit would remain inactive.

The computer unit 100 includes a processor 110, a North Bridge Chip 120 connected to the processor 110 for controlling data flow between the processor 110 and PCI as to allow the processor to save or retrieve files from devices such as a memory and AGP. By connecting a South Bridge Chip 130 to the North Bridge Chip 120 and a Winbond Super I/O chip 140 (i.e., produced by the Winbond Electronics Corporation), a USB interface and peripheral devices (e.g., a keyboard 150, serial port 160 and parallel port 170) can be bridged with the processor 110.

The Winbond Super I/O chip 140, which is connected to the South Bridge 130, activates the computer unit 100 after accepting a valid password received through the keyboard 150. The card reader 200, which is connected to the keyboard 150 and Winbond Super I/O chip 140, allows the authorized user to input a proper password only after the validation process with respect to the personal identification data has been completed.

Fig. 2 is a flow chart showing various steps of the computer unit security system according to the present invention. After an AC power supply is provided, the card reader 200 enters into a standby status (see step 301). A computer user plugs an IC card into the card reader 200 and retrieve information stored in the IC card (see step 302). Meanwhile, the card reader 200 compares existing data stored in the card reader with the data retrieved from the IC card to determine the validity of the retrieved data (see step 303). If the retrieved data are not valid, then step 301 is repeated. Otherwise, the card reader 200 activates the control line as to allow the activation of the keyboard through the Winbond Super I/O chip, and concurrently allowing the LED 210 in the card reader 200 to display a message prompting the computer user to enter a password (see step 304). After the computer user has entered the password, the Winbond Super I/O 140 determines whether the password is valid. If the password is invalid, then step 305 is repeated. Otherwise, the Winbond Super I/O chip140 activates the computer unit 100 (see step 307) to perform normal operations (see step 308). At this time, the card reader 200 determines whether the IC card is still within the card reader 200 (see step 309). If the determination is positive, then the computer unit 100 can be shut down according to the normal procedure (see step 314). Therefore, the card reader 200 detects whether the IC card is removed within 10 seconds (see step 315). If the detection is positive, then the procedure is concluded and the card reader 200 reenters into the standby status. Otherwise, the card reader 200 triggers an alarm sound and step 315 is repeated (see step 316).

In step 309, if card reader 200 determines that the IC card is not in the card reader, then the card reader sends a "no IC card" signal to the computer unit and enters into a protection mode, which activates a system suspend function to stop all input and output operations in the computer unit 100 and concurrently enables the LED in the card reader 200 to display a message to the computer user (see step 310). Thereafter, the card reader 200 checks whether the IC card is reinserted. If no reinsertion is detected, then step 310 is repeated. Otherwise, the card reader again determines if the personal identification data in the IC card is valid. If it is invalid, then step 310 is repeated. Otherwise, the suspend status is lifted and step 308 is repeated.

As discussed above, the present invention provides a method and apparatus for ensuring access security to computer units, which can only be activated after proper validation process and not the other way around. Moreover, if the personal identification data is removed prior to the normal deactivation procedure in the computer unit, then the suspend function will be applied to the computer unit to stop all input and output operations. The computer unit also cannot be reactivated if the revalidation process fails. As such, any authorized access by the computer hackers can be prevented.

The foregoing embodiments are to be considered in all aspects illustrative rather than limiting of the invention described herein. The invention may be embodied in other specific forms without departing from the spirit or essential characteristics thereof.

The features disclosed in the foregoing description, in the claims and / or in the accompanying drawings may, both separately and in any combination thereof, be material for realising the invention in diverse forms thereof.

## Claims

1. A method for preventing unauthorized access into a computer unit using a personal identification device and an input and output (I/O) control chip to control the activation of the computer unit, wherein personal identification data is validated prior to any computer activation, the method comprising the steps of:
(a) said personal identification device entering into a standby status;
(b) inputting said personal identification data into said personal identification device;
(c) determining the validity of said personal identification data and returning to said step (a) if said personal identification data is invalid;
(d) said personal identification device activating a control circuit, which allows said I/O control chip to activate a computer keyboard and displaying a notification message prompting an authorized user to enter a password;
(e) said authorized user entering said password;
(f) said I/O control chip determining validity of said password and returning to said step (e) if said password is invalid;
(g) said I/O control chip activating said computer unit;
(h) said computer unit returns to normal operations;
(i) searching for said personal identification data in said personal identification device, and jumping to step (n) if said personal identification data are found;
(j) said personal identification device activating a suspend function in said computer unit to stop all I/O operations, and informing said suspension to said authorized user through a personal data display;
(k) searching for new personal identification data and returning to step (j) if not found;
(l) determining the validity of said new personal identification data and returning to said step (j) if invalid;
(m) said personal identification device deactivating said suspend function and returning to step (h); and
(n) returning to normal operations for said computer unit.

2. The method of claim 1, further comprising the steps of:
(o) searching for said personal identification data in a preset time period and jumping to step (q) if not found;
(p) triggering an alarm through said personal identification device and returning to step (o); and
(q) said identification device returning to a standby status.

3. The method of Claim 1 or Claim 2, wherein said personal identification device is a card reader.

4. The method of any one of Claims 1 to 3, wherein said personal identification data are derived from an IC card.

5. The method of any one of Claims 1 to 4, wherein said personal identification data display is an LED.

6. The method of Claim 2, wherein said preset time period is set for 10 seconds.

7. An apparatus for a computer unit security system wherein personal identification data is validated prior to any computer activation, the apparatus comprising:
personal identification data for use by a personal identification device for identifying an authorised user;
a personal identification device having means to read the personal identification data and determine the presence thereof; and an I/O control circuit connectable to a computer unit, having a user interface device, so as to identify an authorized user and to suspend operation of the computer unit when the personal identification data is absent from the personal identification device;
means to control the operation of the computer unit;
means to connect the personal identification device to the user interface device and activate the user interface device to allow entry of a password after the authorized user has been identified by the personal identification device; and
means to activate normal operations of the computer unit upon entry of a valid password.

8. The apparatus of Claim 7, wherein the user interface device is a keyboard

9. The apparatus of Claim 7, wherein said I/O control circuit suspends all operations of said computer unit when said personal identification data are removed prior to said computer unit being shut down, and preventing said computer unit from reactivation if said personal identification data is not revalidated, and wherein said computer unit comprises:
a processor;
a North Bridge chip connected to said processor for controlling data flow between said processor and a PCI and allowing said processor to retrieve or save files from at least a memory and AGP;
a South Bridge chip connected to said North Bridge chip and an I/O control chip and serving as a bridge between a USB interface and said I/O control device;
said I/O control chip connected to said South Bridge chip for activating said computer unit after receiving a valid password inputted through a keyboard; and
said keyboard connected to said personal identification device and said I/O control chip which activates said keyboard for inputting said valid password after said authorized user has been identified.

10. The apparatus of Claim 9, wherein said personal identification device includes an LED.

11. The apparatus of Claim 9 or 10, wherein said personal identification device includes a timer for reminding said authorized user regarding the non-removal of said personal identification data within a preset time period after said computer unit has been deactivated.

12. The apparatus of Claim 11, wherein said preset time period is set for 10 seconds.

13. The apparatus of any one of Claims 9 to 12, wherein said personal identification device is a reader.

14. The apparatus of any one of Claims 9 to 13, wherein said personal identification data are derived from an IC card.

## Patentansprüche

1. Verfahren zur Verhinderung von nicht autorisierten Zugriffen in ein Computergerät unter Verwendung einer Personenidentifikationseinrichtung und eines Eingabe- und Ausgabe(I/O)-Steuerchips zur Steuerung der Aktivierung des Computergerätes, worin Personenidentifikationsdaten vor irgendeiner Computeraktivierung validiert werden, wobei das Verfahren die Schritte umfaßt:
(a) Eintreten der Personenidentifikationseinrichtung in einen Bereitschaftszustand;
(b) Eingeben der Personenidentifikationsdaten in besagte Personenidentifikationseinrichtung;
(c) Bestimmen der Gültigkeit der Personenidentifikationsdaten und Zurückkehren zu dem Schritt (a), wenn die Personenidentifikationsdaten ungültig sind;
(d) Aktivieren einer Steuerschaltung durch besagte Personenidentifikationseinrichtung, das dem I/O-Steuerchip gestattet, eine Computertastatur zu aktivieren, und Anzeigen eines Hinweises, der einen autorisierten Benutzer zur Eingabe eines Paßwortes auffordert;
(e) Eingeben des Paßwortes durch den autorisierten Benutzer;
(f) Bestimmen der Gültigkeit der Paßwortes durch den I/O-Steuerchip und Zurückkehren zu dem Schritt (e), wenn das Paßwort ungültig ist;
(g) Aktivieren des Computergerätes durch den I/O-Steuerchip;
(h) Zurückkehren des Computergerätes zu normalen Betriebsweisen;
(i) Suchen nach den Personenidentifikationsdaten in besagter Personenidentifikationseinrichtung und Springen zu Schritt (n), wenn die Personenidentifikationsdaten gefunden sind;
(j) Aktivieren einer Anhaltefunktion in dem Computergerät durch besagte Personenidentifikationseinrichtung zum Anhalten aller I/O-Operationen und Informieren des autorisierten Benutzers über eine Personendatenanzeige über das Anhalten;
(k) Suchen nach neuen Personenidentifikationsdaten und Zurückkehren zu Schritt (j), falls nicht gefunden;
(l) Bestimmen der Gültigkeit der neuen Personenidentifikationsdaten und Zurückkehren zu dem Schritt (j), falls ungültig;
(m)Deaktivieren der Anhaltefunktion durch besagte Personenidentifikationseinrichtung und Zurückkehren zu Schritt (h); und
(n) Zurückkehren zu normalen Betriebsweisen für das Computergerät.

2. Verfahren nach Anspruch 1, ferner die Schritte umfassend:
(o) Suchen nach besagten Personenidentifikationsdaten in einer vorab festgelegten Zeitdauer und Springen zu Schritt (q), falls nicht gefunden;
(p) Auslösen eines Alarms durch besagte Personenidentifikationseinrichtung und Zurückkehren zu Schritt (o); und
(q) Zurückkehren besagter Identifikationseinrichtung zu einem Bereitschaftszustand.

3. Verfahren nach Anspruch 1 oder Anspruch 2, worin besagte Personenidentifikationseinrichtung ein Kartenlesegerät ist.

4. Verfahren nach irgendeinem der Ansprüche 1 bis 3, worin besagte Personenidentifikationsdaten von einer IC-Karte gewonnen werden.

5. Verfahren nach irgendeinem der Ansprüche 1 bis 4, worin besagte Personenidentifikationsdatenanzeige eine LED ist.

6. Verfahren nach Anspruch 2, worin besagte voreingestellte Zeitdauer auf 10 Sekunden eingestellt ist.

7. Vorrichtung für ein Sicherheitssystem für ein Computergerät, worin Personenidentifikationsdaten vor irgendeiner Computeraktivierung validiert werden, wobei die Vorrichtung umfaßt:
Personenidentifikationsdaten zur Verwendung durch eine Personenidentifikationseinrichtung zur Identifizierung eines autorisierten Benutzers;
eine Personenidentifikationseinrichtung mit Mitteln zum Lesen der Personenidentifikationsdaten und Bestimmen des Vorhandenseins desselben; und einer mit einem Computergerät verbindbaren I/O-Steuerschaltung mit einer Benutzeroberflächeneinrichtung zum Identifizieren eines autorisierten Benutzers und Anhalten des Betriebs des Computergerätes, wenn die Personenidentifikationsdaten bei der Personenidentifikationseinrichtung fehlen;
Mittel zum Steuern des Betriebs des Computergerätes;
Mittel zum Verbinden der Personenidentifikationseinrichtung mit der Benutzeroberflächeneinrichtung und Aktivieren der Benutzeroberflächeneinrichtung zum Zulassen einer Eingabe eines Paßworts, nachdem der autorisierte Benutzer von der Personenidentifikationseinrichtung identifiziert worden ist; und
Mittel zum Aktivieren von normalen Betriebsweisen des Computergerätes bei Eingabe eines gültigen Paßworts.

8. Vorrichtung nach Anspruch 7, worin die Benutzeroberflächeneinrichtung eine Tastatur ist.

9. Vorrichtung nach Anspruch 7, worin besagte I/O-Steuerschaltung alle Operationen des Computergerätes anhält, wenn besagte Personenidentifikationsdaten entfernt werden, bevor das Computergerät ausgeschaltet wird, und das Computergerät an einer Reaktivierung hindert, wenn besagte Personenidentifikationsdaten nicht erneut validiert werden, und worin das Computergerät umfaßt:
einen Prozessor;
einen North Bridge-Chip, der zur Steuerung des Datenflusses zwischen dem Prozessor und einem PCI mit dem Prozessor verbunden ist und dem Prozessor gestattet, Dateien von zumindest einem Speicher und AGP abzurufen oder zu sichern;
einen South Bridge-Chip, der mit besagtem North Bridge-Chip und einem I/O-Steuerchip verbunden ist und als eine Brücke zwischen einer USB-Schnittstelle und besagter I/O-Steuereinrichtung dient;
wobei besagter I/O-Steuerchip zur Aktivierung des Computergerätes nach Empfang eines über eine Tastatur eingegebenen gültigen Paßworts mit besagtem South Bridge-Chip verbunden ist; und
besagte Tastatur mit besagter Personenidentifikationseinrichtung und besagtem I/O-Steuerchip verbunden ist, der besagte Tastatur zur Eingabe besagten gültigen Paßworts, nachdem der autorisierte Benutzer identifiziert worden ist, aktiviert.

10. Vorrichtung nach Anspruch 9, worin besagte Personenidentifikationseinrichtung eine LED enthält.

11. Vorrichtung nach Anspruch 9 oder 10, worin besagte Personenidentifikationseinrichtung einen Zeitgeber zum Erinnern des autorisierten Benutzers in Bezug auf die Nichtentfernung der Personenidentifikationsdaten innerhalb einer vorab festgelegten Zeitdauer, nachdem das Computergerät aktiviert worden ist, enthält.

12. Vorrichtung nach Anspruch 11, worin besagte vorab festgelegte Zeitdauer auf 10 Sekunden eingestellt ist.

13. Vorrichtung nach irgendeinem der Ansprüche 9 bis 12, worin besagte Personenidentifikationseinrichtung ein Lesegerät ist.

14. Vorrichtung nach irgendeinem der Ansprüche 9 bis 13, worin besagte Personenidentifikationsdaten von einer IC-Karte gewonnen sind.

## Revendications

1. Procédé pour empêcher l'accès non autorisé dans une unité d'ordinateur utilisant un dispositif d'identification personnelle et une puce de commande des entrées et sorties (E/S) pour commander la mise en fonction de l'unité d'ordinateur, dans lequel les données d'identification personnelle sont validées avant une quelconque mise en fonction de l'ordinateur, le procédé comprenant les étapes de :
(a) ledit dispositif d'identification personnelle entrant dans un état d'attente ;
(b) entrer lesdites données d'identification personnelle dans ledit dispositif d'identification personnelle ;
(c) déterminer la validité desdites données d'identification personnelle et revenir à ladite étape (a) si lesdites données d'identification personnelle sont incorrectes ;
(d) ledit dispositif d'identification personnelle mettant en fonction un circuit de commande, qui permet à ladite puce de commande des E/S de mettre en fonction un clavier d'ordinateur et d'afficher un message de notification sollicitant un utilisateur autorisé à entrer un mot de passe ;
(e) ledit utilisateur autorisé entrant ledit mot de passe ;
(f) ladite puce de commande des E/S déterminant la validité dudit mot de passe et revenant à ladite étape (e) si ledit mot de passe est incorrect ;
(g) ladite puce de commande des E/S mettant en fonction ladite unité d'ordinateur ;
(h) ladite unité d'ordinateur revenant à des opérations normales ;
(i) chercher lesdites données d'identification personnelle dans ledit dispositif d'identification personnelle, et sauter à l'éta (n) si lesdites données d'identification personnelle sont trouvées ;
(j) ledit dispositif d'identification personnelle mettant en service une fonction de suspension dans ladite unité d'ordinateur pour arrêter toutes les opérations des E/S, et informant de ladite suspension ledit utilisateur autorisé via un affichage de données personnelles ;
(k) chercher de nouvelles données d'identification personnelle et revenir à l'étape (j) si elles ne sont pas trouvées ;
(I) déterminer la validité desdites nouvelles données d'identification personnelle et revenir à ladite étape (j) si elles sont incorrectes ;
(m) ledit dispositif d'identification personnelle mettant hors service ladite fonction de suspension et revenant à l'étape (h) ; et
(n) revenir aux opérations normales pour ladite unité d'ordinateur.

2. Procédé selon la revendication 1, comprenant de plus les étapes de :
(o) chercher lesdites données d'identification personnelle dans une période de temps préréglée et sauter à l'étape (q) si elles ne sont pas trouvées ;
(p) déclencher une alarme via ledit dispositif d'identification personnelle et revenir à l'étape (o) ; et
(q) ledit dispositif d'identification personnelle revenant à un état d'attente.

3. Procédé selon la revendication 1 ou la revendication 2, dans lequel ledit dispositif d'identification personnelle est un lecteur de cartes.

4. Procédé selon l'une quelconque des revendications 1 à 3, dans lequel lesdites données d'identification personnelle sont dérivées d'une carte de Cl.

5. Procédé selon l'une quelconque des revendications 1 à 4, dans lequel ledit affichage des données d'identification personnelle est une DEL.

6. Procédé selon la revendication 2, dans lequel ladite période de temps préréglée est réglée pour dix secondes.

7. Appareil pour un système de sécurité d'unité d'ordinateur dans lequel les données d'identification personnelle sont correctes avant une quelconque mise en fonction de l'ordinateur, l'appareil comprenant :
des données d'identification personnelle pour une utilisation par un dispositif d'identification personnelle pour identifier un utilisateur autorisé ;
un dispositif d'identification personnelle ayant des moyens pour lire les données d'identification personnelle et déterminer leur présence ; et un circuit de commande des E/S pouvant être relié à une unité d'ordinateur, ayant un dispositif d'interface d'utilisateur, de façon à identifier un utilisateur autorisé et à suspendre le fonctionnement de l'unité d'ordinateur quand les données d'identification personnelle sont absentes du dispositif d'identification personnelle ;
des moyens pour commander le fonctionnement de l'unité d'ordinateur ;
des moyens pour connecter le dispositif d'identification personnelle au dispositif d'interface d'utilisateur et pour mettre en fonction le dispositif d'interface d'utilisateur pour permettre l'entrée d'un mot de passe après que l'utilisateur autorisé a été identifié par le dispositif d'identification personnelle ; et
des moyens pour mettre en fonction des opérations normales de l'unité d'ordinateur lors de l'entrée d'un mot de passe correct.

8. Appareil selon la revendication 7, dans lequel ledit dispositif d'interface d'utilisateur est un clavier.

9. Appareil selon la revendication 7, dans lequel ledit circuit de commande des E/S suspend toutes les opérations de ladite unité d'ordinateur quand lesdites données d'identification personnelle sont retirées avant l'arrêt de ladite unité d'ordinateur, et empêchant de remettre en fonction ladite unité d'ordinateur si lesdites données d'identification personnelle ne sont pas revalidées; et dans lequel ladite unité d'ordinateur comprend :
un processeur ;
une puce North Bridge reliée audit processeur pour commander le flux de données entre ledit processeur et une PCI et permettant audit processeur de récupérer ou de sauvegarder des fichiers à partir d'au moins une mémoire et un AGP .
une puce South Bridge reliée à ladite puce North Bridge et une puce de commande des E/S et servant comme un pont entre une interface USB et ledit dispositif de commande des E/S ;
ladite puce de commande des E/S reliée à ladite puce South Bridge pour mettre en fonction ladite unité d'ordinateur après réception d'un mot de passe correct entré via un clavier ; et
ledit clavier relié audit dispositif d'identification personnelle et ladite puce de commande des E/S qui met en fonction ledit clavier pour entrer ledit mot de passe correct après identification de l'utilisateur autorisé.

10. Appareil selon la revendication 9, dans lequel ledit dispositif d'identification personnelle inclut une DEL.

11. Appareil selon la revendication 9 ou 10, dans lequel ledit dispositif d'identification personnelle inclut une horloge pour rappeler ledit utilisateur autorisé en ce qui concerne le non-retrait desdites données d'identification personnelle dans une période de temps préréglée après mise hors fonction de ladite unité d'ordinateur.

12. Appareil selon la revendication 11, dans lequel ladite période de temps préréglée est réglée pour dix secondes.

13. Appareil selon l'une quelconque des revendications 9 à 12, dans lequel ledit dispositif d'identification personnelle est un lecteur.

14. Appareil selon l'une quelconque des revendications 9 à 13, dans lequel lesdites données d'identification personnelle sont dérivées d'une carte de Cl.
